# EUROPEAN PATENT APPLICATION

(11) **EP 3 376 443 A1**
(43) Date of publication of application: **19.09.2018**
(21) Application number: 18158336.0
(22) Date of filing: 23.02.2018
(51) Int. Cl.: G06Q 10/02

(54) **LOCATION PRESENTATION METHOD AND INFORMATION PROCESSING APPARATUS**

(30) Priority: 13.03.2017 JP 2017047633
(71) Applicant: FUJITSU LIMITED, Kanagawa 211-8588 (JP)
(72) Inventor: Noro, Nobumi, Kanagawa, 211-8588 (JP)
(74) Representative: Hoffmann Eitle

(57) **Abstract**

A location presentation method includes calculating, by a processor, a time lag between time corresponding to a next agenda in an itinerary stored in a storage and calculation start time, extracting, by a processor, a first location to which it is possible to move for visiting from a current place within the time lag and from which it is possible to move to a second location corresponding to the next agenda; and outputting the first location.

## Description

### FIELD

The embodiments discussed herein are related to a location presentation method and an information processing apparatus.

### BACKGROUND

While multiple people are traveling in accordance with an itinerary planned in advance, it sometimes occurs that, after the people take free action at a destination, the people gather at a meeting location and then continue the travel in accordance with the same itinerary. In such a case as just described, a person who arrives at the meeting location after ending its free action earlier than scheduled time kills time there in many cases because, since an agenda when the person does not intentionally come to have free time is not determined in advance, even if there is a spot suitable sightseeing in the neighborhood, the person does not know how long it takes to visit the spot.

As a proposal of a destination candidate corresponding to a demand of a user, for example, it has been proposed to display, based on the current place of the user and positions of a plurality of destination candidates, a plurality of destination candidates in concentric circles according to the movement costs centered at the current place of the user to represent distance feelings from the current place intuitively.

### CITATION LIST

### PATENT DOCUMENT

[Patent Document 1] Japanese Laid-open Patent Publication No. 2015-137856

### SUMMARY

According to an aspect of the embodiments, a location presentation method includes calculating, by a processor, a time lag between time corresponding to a next agenda in an itinerary stored in a storage and calculation start time, extracting, by a processor, a first location to which it is possible to move for visiting from a current place within the time lag and from which it is possible to move to a second location corresponding to the next agenda; and outputting the first location.

### BRIEF DESCRIPTION OF DRAWINGS

FIG. 1 is a block diagram depicting an example of a configuration of an information processing system of a working example;
FIG. 2 is a view depicting an example of an itinerary information storage;
FIG. 3 is a view depicting an example of a sightseeing information storage;
FIG. 4 is a view depicting an example of a behavior information storage;
FIG. 5 is a view depicting an example of presentation of a drop-in spot;
FIG. 6 is a view depicting an example of a display image of drop-in spots on a map;
FIG. 7 is a view depicting an example of a display image where a drop-in spot is added to an itinerary;
FIG. 8 is a flow chart depicting an example of a location presentation process of a working example; and
FIG. 9 is a block diagram depicting an example of a computer that executes a location presentation program.

### DESCRIPTION OF EMBODIMENTS

The period of free time before meeting time is in most cases short, and if a movement time period and a stay time period to and at a sightseeing spot is taken into consideration, according to the display of a distance feeling from the current place, it is difficult to decide whether or not the person may be in time for the meeting time. Therefore, even if there exists a sightseeing spot in the neighborhood of the meeting location, a person who arrives the meeting location early sometimes abandons a visit to the sightseeing spot.

According to an aspect of the present technology, a location presentation program, a location presentation method and an information processing apparatus are provided by which a visit location that may be taken into an itinerary may be presented.

In the following, working examples of the location presentation program, location presentation method and information processing apparatus disclosed herein are described in detail with reference to the drawings. It is to be noted that the disclosed technology shall not be limited by the present working examples. Further, the working examples described below may be combined suitably within a scope without inconsistency.

### [Working Examples]

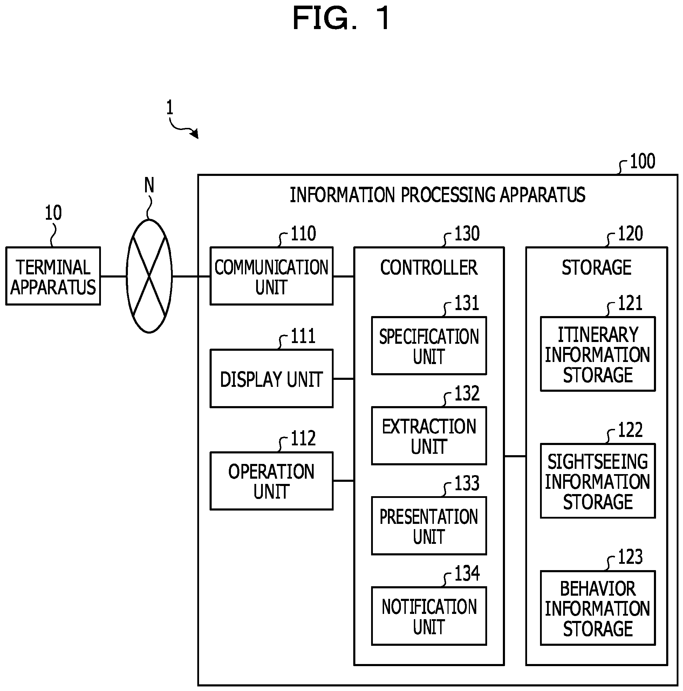

FIG. 1 is a block diagram depicting an example of a configuration of an information processing system of a working example. The information processing system 1 depicted in FIG. 1 includes a terminal apparatus 10 and an information processing apparatus 100. It is to be noted that the number of such terminal apparatus 10 is not limited, and an arbitrary number of terminal apparatus 10 may be included. The terminal apparatus 10 and the information processing apparatus 100 are coupled for communication with each other through a network N. As the network N, in addition to the Internet, an arbitrary type of a communication network such as a local area network (LAN) or a virtual private network (VPN) may be adopted irrespective of whether it is a wired communication network or a wireless communication network.

The terminal apparatus 10 is an information processing apparatus that allows a user to utilize a sightseeing information presentation service provided, for example, by the information processing apparatus 100, and a mobile communication terminal such as a smartphone or a tablet terminal may be used for the terminal apparatus 10. Alternatively, a portable personal computer or the like may be used for the terminal apparatus 10. The terminal apparatus 10 accepts starting of a travel when the user of the terminal apparatus 10 starts the travel in regard to an itinerary registered in advance in a sightseeing information presentation service provided by the information processing apparatus 100. For example, the terminal apparatus 10 accepts a designation of an itinerary whose travel is to be started from the user. The terminal apparatus 10 transmits information of the designated itinerary to the information processing apparatus 100 through the network N. It is to be noted that the itinerary may be downloaded in advance from the information processing apparatus 100 and stored into the terminal apparatus 10.

Thereafter, if a proposal request of drop-in spots, for example, of visit locations, is accepted from the user, the terminal apparatus 10 acquires position information of the current place, for example, the current position and the current time which is calculation start time, and transmits the acquired current position and current time to the information processing apparatus 100 through the network N. It is to be noted that the terminal apparatus 10 acquires the current position using a measurement system such as the global positioning system (GPS). When the information regarding the drop-in spots is received from the information processing apparatus 100 through the network N, the terminal apparatus 10 presents the received information regarding the drop-in spots to the user. If selection of a drop-in spot is accepted from the user, the terminal apparatus 10 transmits the accepted selection information to the information processing apparatus 100 through the network N. Further, if, for example, a message of a drop-in spot regarding a different user during free action is received from the information processing apparatus 100 through the network N, the terminal apparatus 10 displays the received message.

The information processing apparatus 100 is an information processing apparatus by which, if a current position and a current time are received when a designation of an itinerary is accepted from a user, drop-in spots according to the current position and the current time are transmitted to the terminal apparatus 10 so as to be presented to the user. If a current position and current time are received from the terminal apparatus 10, the information processing apparatus 100 specifies, based on the current time, a gap time period between time corresponding to a next agenda from within the registered itinerary and the current time. The information processing apparatus 100 extracts, based on the current position, for example, the current place, and the location corresponding to the next agenda, locations to which the user may move for visiting from the current place and from which the user may move to a location corresponding to the next agenda within the gap time period. The information processing apparatus 100 transmits the extracted places to the terminal apparatus 10 of the user so as to be presented. Consequently, the information processing apparatus 100 may present a drop-in spot, for example, a visit location, which may be additionally taken into the itinerary.

Now, a configuration of the information processing apparatus 100 is described. As depicted in FIG. 1, the information processing apparatus 100 includes a communication unit 110, a display unit 111, an operation unit 112, a storage 120 and a controller 130. It is to be noted that the information processing apparatus 100 may include various functional units a known computer includes in addition to the functional units depicted in FIG. 1 such as functional units of inputting devices or sound outputting devices. It is to be noted that, in the following description, a sightseeing spot or location is sometimes referred to simply as spot.

The communication unit 110 is implemented by a network interface card (NIC) or the like. The communication unit 110 is a communication interface that is coupled by wired communication or wireless communication to the terminal apparatus 10 through the network N and controls communication of information to or from the terminal apparatus 10. The communication unit 110 transmits information, a message or the like regarding a drop-in spot inputted from the controller 130 to the terminal apparatus 10. Further, the communication unit 110 outputs information of a designated itinerary, a current position and current time, selection information and so forth received from the terminal apparatus 10 to the controller 130.

The display unit 111 is a display device for displaying various kinds of information to a manager of the information processing apparatus 100. The display unit 111 is implemented as a display device, for example, by a liquid crystal display unit. The display unit 111 displays various kinds of screen images such as a display screen image inputted from the controller 130.

The operation unit 112 is an inputting device that accepts various kinds of operation from the manager of the information processing apparatus 100. The operation unit 112 is implemented as an inputting device by a keyboard, a mouse and so forth. The operation unit 112 outputs an operation inputted by the manager as operation information to the controller 130. It is to be noted that the operation unit 112 may be implemented as an inputting device by a touch panel or the like, and the display device of the display unit 111 and the inputting device of the operation unit 112 may be integrated with each other.

The storage 120 is implemented, for example, by a random access memory (RAM), a semiconductor memory device such as a flash memory or a storage apparatus such as a hard disk or an optical disk. The storage 120 includes an itinerary information storage 121, a sightseeing information storage 122 and a behavior information storage 123. Further, the storage 120 stores information to be used for processing by the controller 130.

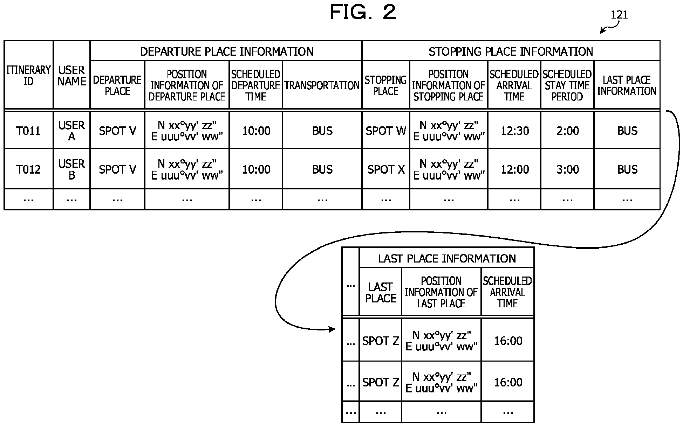

The itinerary information storage 121 stores an itinerary to be registered into the sightseeing information presentation service provided by the information processing apparatus 100. FIG. 2 is a view depicting an example of an itinerary information storage. As depicted in FIG. 2, the itinerary information storage 121 includes items such as "itinerary identifier (ID)," "user name," "departure place information," "stopping place information" and "last place information." Further, "departure place information" includes items such as "departure place," "position information of departure place," "scheduled departure time" and "transportation." The itinerary information storage 121 stores them as one record, for example, for each itinerary ID.

"itinerary ID" is an identifier for identifying an itinerary that is information indicative of a destination and a schedule of a travel. "user name" is information indicative of a user whose itinerary is registered in the sightseeing information presentation service, for example, a user who is to travel based on the itinerary. "departure place" is information indicative of a name of a departure place a spot name such as a station or a hotel. "position information of departure place" is information indicative of a position of the departure place. "position information of departure place" is represented by a longitude and a latitude and is based on a geodetic system such as a world geodetic system (WGS84). "scheduled departure time" is information indicative of scheduled time at which the user is to leave the departure place in the itinerary. "transportation" is information indicative of traffic used for moving from the departure place to a next stopping place or the last place.

"stopping place information" includes items such as "stopping place," "position information of stopping place," "scheduled arrival time," "scheduled stay time period" and "transportation." The "stopping place" is information indicative of a name of a stopping place, for example, a spot name of a sightseeing spot. "position information of stopping place" is information indicative of a position of the stopping place. "position information of stopping place" is represented by a longitude and a latitude and is based on a geodetic system such as the world geodetic system (WGS84). "scheduled arrival time" is information indicative of scheduled arrival time from the departure place or a preceding stopping place to the current stopping place. "scheduled stay time period" is information indicative of a scheduled stay time period set, for example, based on an average stay time period of tourists at the current stopping place. "transportation" is information indicative of traffic for moving from the current stopping place to a next stopping place or the last place. It is to be noted that, although description of scheduled departure time at the stopping place is omitted because the scheduled departure time is determined from the arrival time and the scheduled stay time period, an item for the scheduled departure time may be provided additionally.

"last place information" includes items such as "last place," "position information of last place" and "scheduled arrival time." "last place" is information indicative of a name of the last place, for example, a spot name of a station or a hotel. "position information of last place" is information indicative of a position of the last place. "position information of last place" is represented by a longitude and a latitude and is based on a geodetic system such as the world geodetic system (WGS84). "scheduled arrival time" is information indicative of scheduled arrival time from the departure place or the stopping place to the last place.

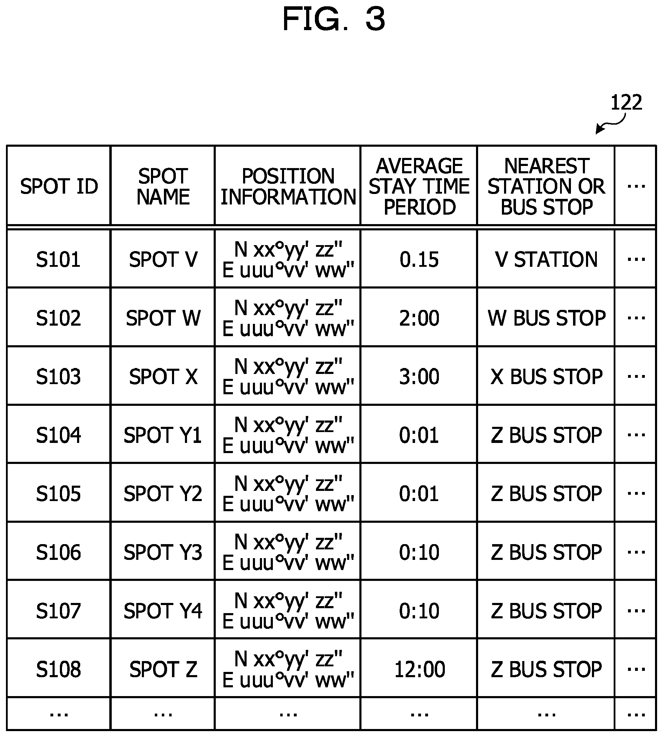

Referring back to FIG. 1, the sightseeing information storage 122 stores position information of a sightseeing spot, an average stay time period at the sightseeing spot and so forth therein for each sightseeing spot. FIG. 3 is a view depicting an example of a sightseeing information storage. As depicted in FIG. 3, the sightseeing information storage 122 includes items such as "spot ID," "spot name," "position information," "average stay time period" and "nearest station or bus stop." The sightseeing information storage 122 stores them as one record, for example, for each spot ID.

"spot ID" is an identifier for identifying a sightseeing spot. "spot name" is information indicative of a name of the sightseeing spot. "position information" is information indicating a position of the sightseeing spot. "position information" is represented by a longitude and a latitude and is based on a geodetic system such as the world geodetic system (WGS84). "average stay time period" is information indicative of an average stay time period of tourists at the sightseeing spot. "nearest station or bus stop" is information indicative of the nearest station or bus stop from the sightseeing spot.

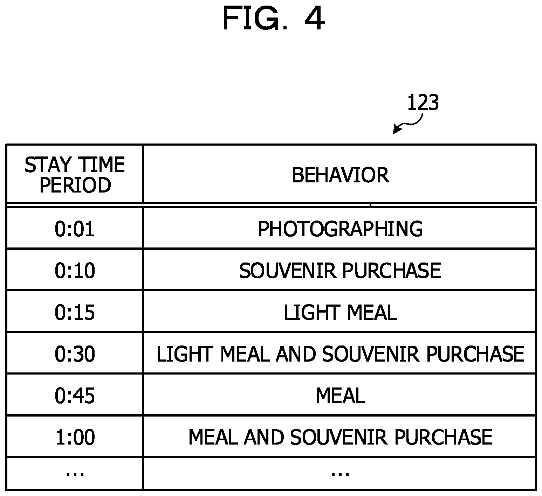

Referring back to FIG. 1, the behavior information storage 123 stores a behavior in which the user may perform within the stay time period at the sightseeing spot in an associated relationship with the stay time period. FIG. 4 is a view depicting an example of a behavior information storage. As depicted in FIG. 4, the behavior information storage 123 includes items of "stay time period" and "behavior." The behavior information storage 123 stores them as one record, for example, for each stay time period.

"stay time period" is information indicative of a time period taken for a behavior that may be performed by the user at a drop-in spot. "behavior" is information indicating a kind of a behavior that may be performed by the user such as photographing or purchase of a souvenir. In the example of FIG. 4, it is indicated that, for example, where the stay time period is "0:01," "photographing" may be performed as a behavior for one minute. Similarly, it is depicted that, for example, where the stay time period is "0:10," "purchase of souvenir" may be performed as a behavior for ten minutes.

Referring back to FIG. 1, the controller 130 is implemented by a program stored in a storage apparatus provided, for example, in a central processing unit (CPU) or a micro processing unit (MPU) and executed by the CPU or the MPU using a RAM as a working area. Alternatively, the controller 130 may be implemented by an integrated circuit such as an application specific integrated circuit (ASIC) or a field programmable gate array (FPGA). The controller 130 includes a specification unit 131, an extraction unit 132, a presentation unit 133 and a notification unit 134 and implements or executes functions or actions of information processing hereinafter described. It is to be noted that the internal configuration of the controller 130 is not limited to configuration depicted in FIG. 1 but may be any other configuration if it performs the information processing hereinafter described.

The specification unit 131 specifies a difference between the current time and scheduled arrival time at a next stopping place, for example, a gap time period. When an instruction to start execution of a location presentation process is issued first in order for a user of the terminal apparatus 10 to start a travel, the specification unit 131 receives information to start a travel, for example, information of a designated itinerary, from the terminal apparatus 10 through the network N and the communication unit 110. The information of the designated itinerary includes, for example, an itinerary ID and a user name. The specification unit 131 refers to the itinerary information storage 121 to accept the designation of the itinerary based on the received information of the designated itinerary. For example, if a current position and current time are received from the terminal apparatus 10 after then, the specification unit 131 executes various processes of the location presentation process based on the designated itinerary.

After the designation of the itinerary is accepted, the specification unit 131 waits for reception of a current position and current time from the terminal apparatus 10. If a current position and current time are received from the terminal apparatus 10 through the network N and the communication unit 110, the specification unit 131 acquires the received current position and current time. The specification unit 131 refers to the itinerary information storage 121 to acquire a next stopping place and scheduled arrival time of the designated itinerary based on the acquired current position and current time. The specification unit 131 calculates a free time period, for example, a gap time period, based on the current time and the acquired scheduled arrival time. For example, the specification unit 131 specifies, based on the current time, a gap time period between time corresponding to a next agenda within the registered itinerary and the current time. The specification unit 131 outputs the specified gap time period to the extraction unit 132 together with the current time and the current position.

To the extraction unit 132, a gap time period, current position and current time are inputted from the specification unit 131. The extraction unit 132 refers to the itinerary information storage 121 and the sightseeing information storage 122 to calculate a movement time period and a stay time period to and at a next stopping place from the current position through a drop-in spot based on the current position, position information of the next stopping place and position information of drop-in spots. A drop-in spot is, for example, a sightseeing spot located in the proximity of the next stopping place or a sightseeing spot located on a route of movement from the current position to the next stopping place. It is to be noted that the movement time period may be calculated based on a walking speed set in advance or the like over a movement distance on a road or the like on a map obtained from map information acquired from a map information server not depicted. Alternatively, the process for calculating the movement time period from the position information may acquire a movement time period by transmitting the position information to the map information server not depicted. For the stay time period, for example, an average stay time period for each spot stored in the sightseeing information storage 122 may be used. For example, the extraction unit 132 calculates a movement time period and a stay time period for each drop-in spot.

The extraction unit 132 compares, for each of drop-in spots with regard to which a movement time period and a stay time period are calculated, the movement time period and stay time period with the gap time period to extract drop-in spots with regard to which the sum of the movement time period and the stay time period is within the gap time period as a drop-in spot group.

The extraction unit 132 refers to the itinerary information storage 121 to decide whether or not the extracted drop-in spot group includes a drop-in spot or spots, for example, a sightseeing spot or spots, included in the designated itinerary. If the extraction unit 132 decides that the drop-in spot group includes a drop-in spot or spots included in the designated itinerary, the extraction unit 132 excludes the drop-in spot or spots included in the itinerary from the drop-in spot group. It is to be noted that any drop-in spot included in a portion of the designated itinerary at or later than a next agenda may be excluded from the drop-in spot group. The extraction unit 132 outputs the drop-in spot group from which the drop-in spot or spots included in the itinerary are excluded to the presentation unit 133.

If the extraction unit 132 decides that the drop-in spot group does not include a drop-in spot included in the designated itinerary, the extraction unit 132 outputs the extracted drop-in spot group as it is to the presentation unit 133.

For example, the extraction unit 132 extracts, based on the current place and the location corresponding to the next agenda, locations to which the user may move for visiting from the current place and from which the user may move to a location corresponding to the next agenda within the gap time period. Further, the location to be extracted is a location not included in the registered itinerary. Further, the location to be extracted is a location not included in a portion of the registered itinerary at or later than the next agenda.

When a drop-in spot group is inputted from the extraction unit 132, the presentation unit 133 refers to the sightseeing information storage 122 to acquire position information of individual drop-in spots. The presentation unit 133 transmits the acquired position information of the drop-in spots to the map information server not depicted and receives and acquires map information including a range of position information of each drop-in spot from the map information server. The presentation unit 133 generates map information in which the drop-in spots are arranged in the acquired map information.

Further, the presentation unit 133 refers to the itinerary information storage 121 and the behavior information storage 123 to generate an itinerary plan in which a behavior at each drop-in spot is added to the designated itinerary. The presentation unit 133 transmits the generated map information in which the drop-in spots are arranged and the itinerary plan in which the behaviors at the drop-in spots are added as information relating to the drop-in spots to the terminal apparatus 10 through the communication unit 110 and the network N.

For example, the presentation unit 133 transmits the drop-in spot group, for example, the locations, extracted by the extraction unit 132 to the terminal apparatus 10 so as to be presented. Further, together with the presentation of the locations, the presentation unit 133 presents a behavior plan according to a gap time period at each of the locations.

After the presentation unit 133 transmits the information relating to the drop-in spots to the terminal apparatus 10, the presentation unit 133 receives selection information of a drop-in spot or spots from the terminal apparatus 10 through the network N and the communication unit 110. The presentation unit 133 accepts selection of the drop-in spot or spots based on the received selection information. It is to be noted that the selection information of a drop-in spot includes also a behavior at the drop-in spot. The presentation unit 133 updates the designated itinerary in the itinerary information storage 121 with the selected itinerary plan based on the accepted selection of a drop-in spot or spots, for example, based on selection of the itinerary plan including the drop-in spot or spots. After the presentation unit 133 updates the itinerary, the presentation unit 133 outputs the selection information of the drop-in spots to the notification unit 134.

When the selection information of drop-in spots is inputted from the presentation unit 133, the notification unit 134 refers to the itinerary information storage 121 to decide whether or not a notification destination associated with the itinerary exists. If the notification unit 134 decides that a notification destination associated with the itinerary exists, the notification unit 134 transmits a message according to a type of the selected drop-in spot to the terminal apparatus 10 of the notification destination through the communication unit 110 and the network N. As the type of the drop-in spot, there are an image pickup spot, a souvenir purchase spot, a light meal spot, a meal spot and so forth. For example, if the type of the drop-in spot is a meal spot, the message may be "to drop in a little and enter a restaurant named YYYY at XX o'clock for meal." The notification unit 134 ends the location presentation process after the notification unit 134 transmits the message or when the notification unit 134 decides that a notification destination associated with the itinerary does not exist. In this case, the information processing apparatus 100 may continuously wait for reception of a current position and current time from the terminal apparatus 10.

For example, if a notification destination is registered in an associated relationship with the itinerary, the notification unit 134 notifies the notification destination of the location, for example, the drop-in spot. Further, the notification unit 134 transmits a message according to the type of the location to the notification destination.

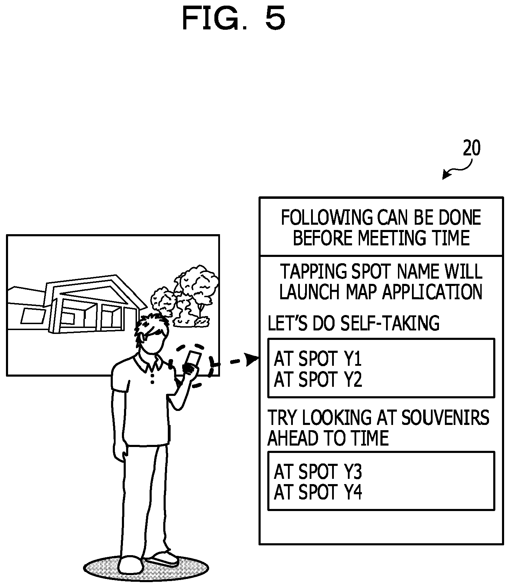

Here, presentation of a drop-in spot is described with reference to FIGs. 5 to 7. In the description with reference to FIGs. 5 to 7, a case is described in which, for example, when a user A and another user B take different actions and determine to meet up at 16:00 at a spot Z, the user A arrives at the spot Z at 15:30 30 minutes before the scheduled arrival time that is 16:00. FIG. 5 is a view depicting an example of presentation of a drop-in spot. A display screen image 20 depicted in FIG. 5 is an example of a screen image displayed on the terminal apparatus 10 of the user A when the user A arriving at 15:30 at the spot Z issues a proposal request for a drop-in spot. On the display screen image 20, as a behavior plan for a behavior capable of being taken till 16:00 that is the meeting time in response to the current position of the user A and the current time, a spot Y1 and another spot Y2 at which the user A may pick up a self-image and a further spot Y3 and a still further spot Y4 at which souvenir purchase may be performed are listed up. For example, the display screen image 20 is a screen image that proposes what may be done within the gap time period such as "why do not you shoot the exterior of the spot?," "why do not you enter and walk around the facilities?" or "why do not you shop at the facilities?" If the user A taps the spot Y1 on the display screen image 20 of the terminal apparatus 10, for example, the display screen image 20 changes over to a display screen image that displays the drop-in spots on a map.

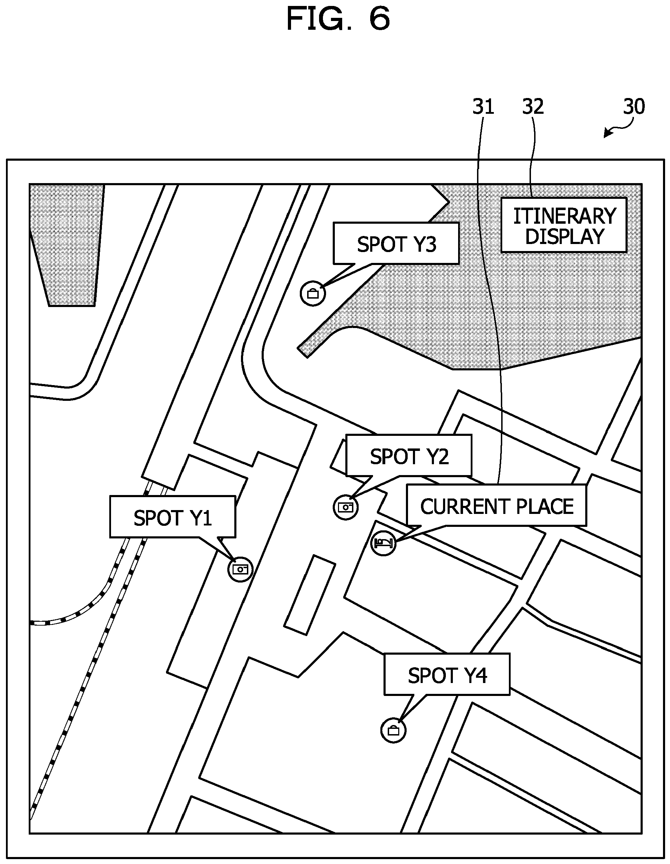

FIG. 6 is a view depicting an example of a display image of drop-in spots on a map. A display screen image 30 of FIG. 6 is a screen image after changed over from the display screen image 20 of FIG. 5. On the display screen image 30, a current place 31 that is the current position of the user A, spots Y1 to Y4 that are neighboring drop-in spots, and an itinerary display button 32 for changing over to a screen image indicative of a candidate itinerary when the spots Y1 to Y4 are added to the itinerary are displayed on a map. The spots Y1 and Y2 are drop-in spots that are located at distances of approximately three minutes on hoot from the current place 31 and at which a photograph may be taken. The spots Y3 and Y4 are drop-in spots that are located at distances of approximately ten minutes on foot from the current place 31 and at which a souvenir may be purchased. In this manner, the information processing apparatus 100 may arrange and present drop-in spots at which the user A may drop in before the meeting time from the current place 31 on a map of the terminal apparatus 10 of the user A. If, for example, the itinerary display button 32 is depressed by the user A, the terminal apparatus 10 changes over the display screen image to the display screen image of the itinerary plan.

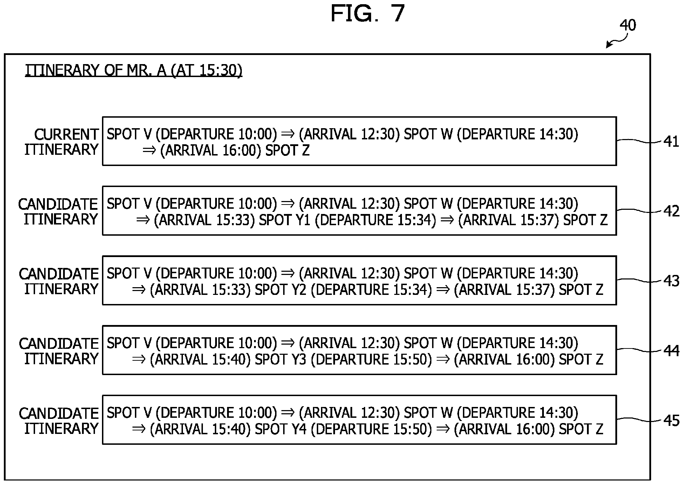

FIG. 7 is a view depicting an example of a display image where a drop-in spot is added to an itinerary. A display screen image 40 depicted in FIG. 7 is, for example, a display screen image of the itinerary plan displayed in response to depression of the itinerary display button 32 on the display screen image 30 depicted in FIG. 6. On the display screen image 40, a current itinerary 41 and candidate itineraries 42 to 45 in which the spots Y1 to Y4 are each added to the current itinerary 41, at time at which the user A uses the terminal apparatus 10 to perform a proposal request for a drop-in spot, for example, at the current time. The candidate itinerary 42 has the spot Y1 added between a spot W and another spot Z. The candidate itinerary 43 has the spot Y2 added between the spot W and the spot Z. It is to be noted that, since the candidate itineraries 42 and 43 still have a margin in comparison with 16:00 that is the scheduled arrival time at the spot Z even after the user A drops in at the spot Y1 or Y2, the information processing apparatus 100 may present an itinerary to which the spots Y1 and Y2 are added.

Meanwhile, the candidate itinerary 44 has the spot Y3 added between the spot W and the spot Z. The candidate itinerary 45 has the spot Y4 added between the spot W and the spot Z. In regard to the spots Y3 and Y4, if the user A drops in at the spot Y3 or Y4 from the current place 31 depicted in FIG. 6, the user A will arrive just at 16:00 at the spot Z. If one of the candidate itineraries is selected by an operation such as a tapping operation by the user A, the terminal apparatus 10 transmits the selection information of the drop-in spot to the information processing apparatus 100. When the information processing apparatus 100 receives the selection information of the drop-in spot, the information processing apparatus 100 updates the corresponding itinerary in the itinerary information storage 121 and transmits a message that the user A will drop in to the terminal apparatus 10 of the user B who will meet up with the user A. The message may have the substance, for example, "I will drop in at the spot Y3 now to purchase a souvenir. I will arrive at 16:00 at the meeting location." It is to be noted that a drop-in spot may be selected by tapping a spot name displayed on the map on the display screen image 30 depicted in FIG. 6. Further, when a spot name on the map is tapped to select a drop-in spot, the display screen image 40 of an itinerary plan may be displayed in a state in which the corresponding itinerary is selected.

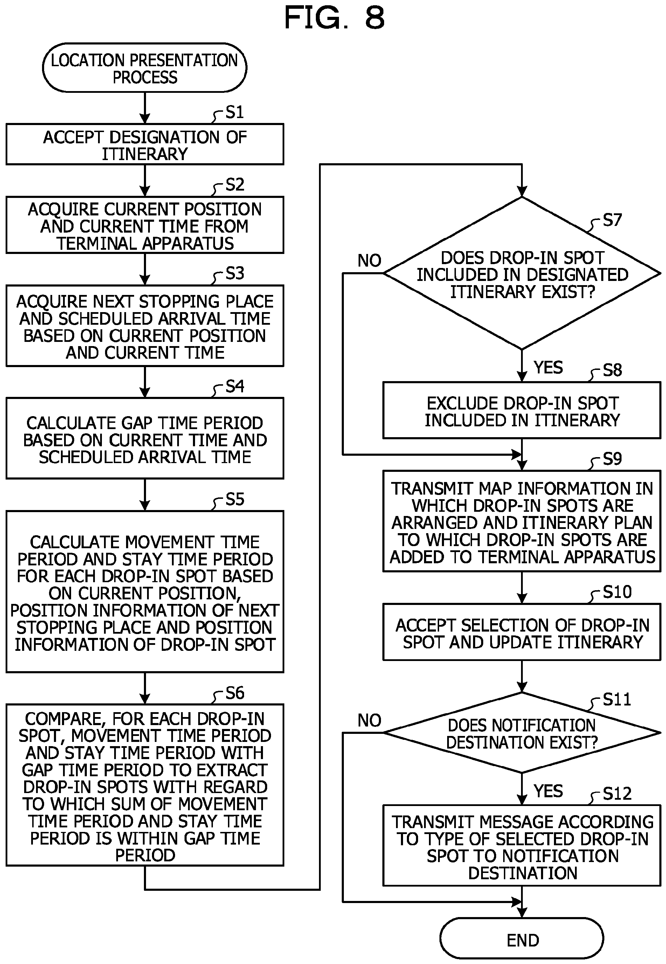

Now, operation of the information processing apparatus 100 of the working example is described. FIG. 8 is a flow chart depicting an example of a location presentation process of a working example.

When the user of the terminal apparatus 10 starts a travel, the specification unit 131 of the information processing apparatus 100 first receives information of a designated itinerary from the terminal apparatus 10. The specification unit 131 refers to the itinerary information storage 121 to accept the designation of the itinerary based on received information of the designated itinerary (step S1).

After the specification unit 131 accepts the designation of the itinerary, the specification unit 131 waits for reception of a current position and current time from the terminal apparatus 10. If the specification unit 131 receives a current position and current time from the terminal apparatus 10, the specification unit 131 acquires the received current position and current time (step S2).

The specification unit 131 refers to the itinerary information storage 121 to acquire a next stopping place and scheduled arrival time in the designated itinerary based on the acquired current position and current time (step S3). The specification unit 131 calculates a gap time period based on the current time and the acquired scheduled arrival time (step S4). The specification unit 131 outputs the specified gap time period to the extraction unit 132 together with the current time and the current position.

When the gap time period, current position and current time are inputted from the specification unit 131, the extraction unit 132 calculates a movement time period and a stay time period for each drop-in spot based on the current position, position information of a next stopping place and position information of a drop-in spot (step S5). The extraction unit 132 compares, for each drop-in spot, the movement time period and stay time period with the gap time period to extract drop-in spots with regard to which the sum of the movement time period and the stay time period is within the gap time period as a drop-in spot group (step S6).

The extraction unit 132 refers to the itinerary information storage 121 to decide whether or not the extracted drop-in spot group includes a drop-in spot or spots included in the designated itinerary (step S7). If the extraction unit 132 decides that the drop-in spot group includes a drop-in spot or spots included in the designated itinerary (step S7: affirmative), the extraction unit 132 excludes the drop-in spot or spots included in the itinerary from the drop-in spot group (step S8). The extraction unit 132 outputs the drop-in spot group from which the drop-in spot or spots included in the itinerary are excluded to the presentation unit 133.

If the extraction unit 132 decides that the drop-in spot group does not include a drop-in spot included in the designated itinerary (step S7: negative), the extraction unit 132 outputs the extracted drop-in spot group as it is to the presentation unit 133.

When the drop-in spot group is inputted from the extraction unit 132, the presentation unit 133 refers to the sightseeing information storage 122 to acquire position information of each of the drop-in spots. The presentation unit 133 acquires, based on the acquired position information of the drop-in spots, map information including ranges of the position information of the drop-in spots from the map information server not depicted to generate map information in which the drop-in spots are arranged. Further, the presentation unit 133 refers to the itinerary information storage 121 and the behavior information storage 123 to generate itinerary plans in which behaviors at the drop-in spots are added to the designated itinerary. The presentation unit 133 transmits the generated map information in which the drop-in spots are arranged and the itinerary plans to which the drop-in spots are added as information relating to the drop-in spots to the terminal apparatus 10 (step S9).

The presentation unit 133 receives selection information of a drop-in spot or spots from the terminal apparatus 10. The presentation unit 133 accepts the selection of the drop-in spot or spots based on the received selection information and updates the designated itinerary in the itinerary information storage 121 (step S10). After the itinerary is updated, the presentation unit 133 outputs the selection information of the drop-in spot or spots to the notification unit 134.

When the selection information of a drop-in spot or spots is inputted from the presentation unit 133, the notification unit 134 refers to the itinerary information storage 121 to decide whether or not a notification destination associated with the itinerary exists (step S11). If the notification unit 134 decides that a notification destination associated with the itinerary exists (step S11: affirmative), the notification unit 134 transmits a message according to the type of the selected drop-in spot or spots to the terminal apparatus 10 of the notification destination (step S12).

When the notification unit 134 transmits the message or decides that a notification destination associated with the itinerary does not exist (step S11: negative), the notification unit 134 ends the location presentation process. Consequently, the information processing apparatus 100 may present a visit location that may be taken into the itinerary. For example, the information processing apparatus 100 may present an opportunity in which the user may contact with charms of a greater number of regions making use of a free time period after arrival at a stopping place or a last place of the itinerary.

In this manner, the information processing apparatus 100 specifies, based on the current time, a gap time period between time corresponding to a next agenda in the registered itinerary and the current time. Further, the information processing apparatus 100 extracts, based on the current place and a location corresponding to a next agenda, locations to which the user may move for visiting from the current place and from which the user may move to a place corresponding to the next agenda within the gap time period. Further, the information processing apparatus 100 presents the extracted locations. As a result, the information processing apparatus 100 may present visit locations that may be taken into the itinerary.

Further, in the information processing apparatus 100, the locations are locations that are not included in the registered itinerary. As a result, the information processing apparatus 100 may present an opportunity in which the user may contact with charms of a greater number of regions.

Alternatively, in the information processing apparatus 100, the locations are locations that are not included in a portion of the registered itinerary at or later than a next agenda. As a result, the information processing apparatus 100 may present an opportunity in which the user may visit a spot, which the user was not able to visit sufficiently because the itinerary was so tight or at which the user forgot to purchase a souvenir, once again.

Further, where a notification destination is registered in an associated relationship with the itinerary, the information processing apparatus 100 notifies the notification destination of the location. As a result, the information processing apparatus 100 may notify an accompanying user, who behaves separately, of information regarding what drop-in spot the user intends to visit.

Further, the information processing apparatus 100 notifies a notification destination of a message according to the type of the location. As a result, the information processing apparatus 100 may notify a different user of the notification destination of information which drop-in spot the different user takes.

Further, the information processing apparatus 100 presents a behavior plan according to a gap time period at the location in addition to the presentation of a location. As a result, the information processing apparatus 100 may present the substance of the behavior at the drop-in spot in addition to a drop-in spot.

It is to be noted that, although, in the working example described above, presentation of a drop-in spot is performed when the user operates the terminal apparatus 10, the presentation is not limited to this. For example, if the current position of the terminal apparatus 10 is in the proximity of a next stopping place and the current time is before scheduled arrival time at the next stopping place, a drop-in spot may be push-distributed to the terminal apparatus 10. This makes it possible to present the drop-in spot such that the user may not become bored.

Further, although, in the working example described above, presentation of a drop-in spot is performed, the presentation is not limited to this. Travel goods such as an optional tour may be presented as related information of a drop-in spot.

Further, while, in the working example described above, a case in which one or two drop-in spots are added to an itinerary is described as an example, addition of drop-in spots is not limited to this. For example, a plurality of different behaviors may be presented such that they are combined and added to an itinerary. For example, such a behavior as to perform photographing, purchase a souvenir or look around the exhibits may be presented at a drop-in spot at which a meal is to be taken.

Further, while, in the working example described above, position information, an average stay time period, a nearest station and so forth at a drop-in spot, for example, at a sightseeing spot, are given as an example as sightseeing information, the sightseeing information is not limited to them. For example, the sightseeing information may include an image, a characteristic, a date and time, and a price. Further, the sightseeing information may include traffic information to a sightseeing spot, for example, a name of a route, a timetable, and a price. Furthermore, the sightseeing information may include information of travel goods, for example, a name, an itinerary, a date and time, a minimum number of people, and a price.

Further, the respective components of the respective units depicted in the drawings may not necessarily be physically configured in such a manner as depicted in the drawings. For example, particular forms of disintegration and integration of the respective units are not limited to those depicted in the drawings and all or part of them may be configured in a functionally or physically disintegrated or integrated fashion in an arbitrary unit depending upon various loads, use situations and so forth. For example, the presentation unit 133 and the notification unit 134 may be integrated. Further, the order of the respective processes depicted in the drawings is not limited to that described hereinabove, and the processes may be carried out simultaneously or may be carried out in a rearranged order without causing any contradiction of the processing substance.

Further, the various processing functions performed by the individual devices or apparatus may be executed wholly or at arbitrary part thereof on a CPU (or a microcomputer such as an MPU or a micro controller unit (MCU)). Further, the various processing functions may naturally be executed wholly or at arbitrary part thereof on a program that is analyzed and executed on a CPU (or a microcomputer such as an MPU or an MCU) or on hardware by wired logic.

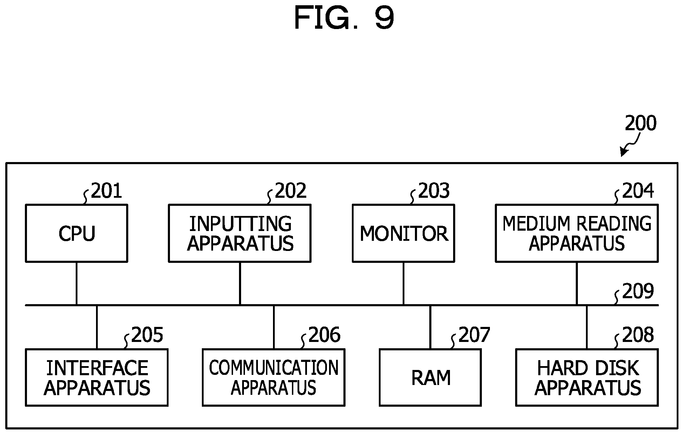

Incidentally, the various processes described hereinabove in connection with the working example described above may be implemented by a program prepared in advance and executed by a computer. Therefore, in the following, an example of the computer that executes a program having functions similar to those of the working example described hereinabove is described. FIG. 9 is a block diagram depicting an example of a computer that executes a location presentation program.

As depicted in FIG. 9, the computer 200 includes a CPU 201 that executes various arithmetic operation processes, an inputting apparatus 202 that accepts data inputting, and a monitor 203. The computer 200 further includes a medium reading apparatus 204 that reads a program and so forth from a recording medium, an interface apparatus 205 for coupling to various apparatus, and a communication apparatus 206 for coupling to a different information processing apparatus or the like by wired communication or wireless communication. The computer 200 further includes a RAM 207 that temporarily stores various kinds of information, and a hard disk apparatus 208. The apparatus 201 to 208 are coupled to a bus 209.

In the hard disk apparatus 208, a location presentation program having functions similar to those of the processing units of the specification unit 131, extraction unit 132, presentation unit 133 and notification unit 134 depicted in FIG. 1 is stored. Further, in the hard disk apparatus 208, the itinerary information storage 121, sightseeing information storage 122, behavior information storage 123 and various data for implementing the location presentation program are stored. The inputting apparatus 202 accepts inputting of various kinds of information such as operation information from a manager of the computer 200. The monitor 203 displays various screen images such as a display screen image to the manager of the computer 200. The interface apparatus 205 has, for example, a printing apparatus coupled thereto. The communication apparatus 206 has a function similar, for example, to that of the communication unit 110 depicted in FIG. 1 and is coupled to the network N to exchange various kinds of information with the terminal apparatus 10 and so forth.

The CPU 201 performs various processes by reading out programs stored in the hard disk apparatus 208, deploying the programs into the RAM 207 and then executing the programs. Further, the programs may cause the computer 200 to function as the specification unit 131, extraction unit 132, presentation unit 133 and notification unit 134 depicted in FIG. 1.

It is to be noted that the location presentation program described above may not necessarily be stored in the hard disk apparatus 208. For example, a program stored in a storage medium capable of being read by the computer 200 may be read out and executed by the computer 200. The recording medium capable of being read by the computer 200 is a portable recording medium such as a compact disc read only memory (CD-ROM), a digital versatile disk (DVD) or a universal serial bus (USB) memory, a semiconductor memory such as a flash memory or a hard disk drive. Alternatively, the location presentation program may be stored in an apparatus coupled to a public network, the Internet or a LAN such that the computer 200 reads out the location presentation program from the apparatus and executes the location presentation program.

### REFERENCE SIGNS LIST

- 1: Information processing system
- 10: Terminal apparatus
- 100: Information processing apparatus
- 110: Communication unit
- 111: Display unit
- 112: Operation unit
- 120: Storage
- 121: Itinerary information storage
- 122: Sightseeing information storage
- 123: Behavior information storage
- 130: Controller
- 131: Specification unit
- 132: Extraction unit
- 133: Presentation unit
- 134: Notification unit
- N: Network

## Claims

1. A location presentation method comprising:
calculating, by a processor, a time lag between time corresponding to a next agenda in an itinerary stored in a storage and calculation start time;
extracting, by a processor, a first location to which it is possible to move for visiting from a current place within the time lag and from which it is possible to move to a second location corresponding to the next agenda; and
outputting the first location.

2. The location presentation method according to claim 1, wherein
the first location is not included in the stored itinerary.

3. The location presentation method according to claim 1, wherein
the first location is not included in a portion of the stored itinerary at or later than the next agenda.

4. The location presentation method according to claim 1, wherein,
where a notification destination is stored in the storage in an associated relationship with the itinerary, a notification of the first location is issued to the notification destination.

5. The location presentation method according to claim 4, wherein
a message according to a type of the first location is transmitted to the notification destination.

6. The location presentation method according to claim 1, wherein
a behavior plan according to the time lag at the first location is presented together with presentation of the first location.

7. A location presentation apparatus comprising:
specification unit configured to calculate a time lag between time corresponding to a next agenda in an itinerary stored in a storage and calculation start time;
extraction unit configured to extract a first location to which it is possible to move for visiting from a current place within the time lag and from which it is possible to move to a second location corresponding to the next agenda; and
presentation unit configured to output the first location.
